# EUROPÄISCHE PATENTSCHRIFT

(11) **EP 1 358 477 B1**
(45) Veröffentlichungstag und Bekanntmachung des Hinweises auf die Patenterteilung: **07.04.2010**
(21) Anmeldenummer: 02706676.0
(22) Anmeldetag: 06.02.2002
(51) Int. Cl.: G01N 30/78, G01N 30/02

(54) **VERFAHREN ZUR GASCHROMATOGRAPHISCHEN ANALYSE EINER PROBE**
METHOD FOR THE GAS CHROMATOGRAPHIC ANALYSIS OF A SAMPLE
PROCEDE D'ANALYSE D'UN ECHANTILLON PAR CHROMATOGRAPHIE EN PHASE GAZEUSE

(30) Priorität: 08.02.2001 DE 10105728
(43) Veröffentlichungstag der Anmeldung: 05.11.2003
(73) Patentinhaber: SIEMENS AKTIENGESELLSCHAFT, 80333 München (DE)
(72) Erfinder: MÜLLER, Friedhelm, 76351 Linkenheim-Hochstetten (DE)
(86) Internationale Anmeldenummer: PCT/DE2002/000434
(87) Internationale Veröffentlichungsnummer: WO 2002/063290

(56) Entgegenhaltungen:
- US-A- 3 686 923
- US-A- 4 215 563
- US-A1- 2001 029 772
- PATENT ABSTRACTS OF JAPAN vol. 011, no. 042 (P-545), 6. Februar 1987 (1987-02-06) & JP 61 212759 A (SHIMADZU CORP), 20. September 1986 (1986-09-20)
- DATABASE WPI Section Ch, Week 199642 Derwent Publications Ltd., London, GB; Class J04, AN 1996-415685 XP002902542 & JP 08 201368 A (NEC CORP), 9. August 1996 (1996-08-09)

## Beschreibung

Bei der Gaschromatographie wird ein zu analysierendes Stoffgemisch (Probe) mittels einer Dosiereinrichtung in Form eines möglichst kurzen und scharf begrenzten Probenpfropfes auf den Eingang einer Trenneinrichtung (Trennsäule, Trennsäulenschaltung) gegeben und mittels eines Trägergasstromes durch die Trenneinrichtung hindurch transportiert. Die einzelnen Komponenten der Probe treten in der Trenneinrichtung mit einer Trennsubstanz in unterschiedlicher Weise in Wechselwirkung, so dass sie verschieden schnell durch die Trenneinrichtung hindurch transportiert werden und nacheinander an deren Ausgang erscheinen. Aus der einzigen Mischzone des anfänglichen Probenpfropfes entstehen also unterschiedliche aufeinanderfolgende Zonen mit den getrennten Probenkomponenten, wobei die Breiten dieser Zonen aufgrund des Transports der Komponenten durch die Trenneinrichtung und ihre Wechselwirkung mit der Trennsubstanz größer als die des Probenpfropfes sind. Die getrennten Probenkomponenten werden am Ausgang der Trenneinrichtung mittels eines Detektors erfasst, der ein analoges Detektorsignal (Chromatogramm) mit Peaks beim Auftreten jeder einzelnen getrennten Komponente erzeugt. Die Breite jedes einzelnen Peaks entspricht der Breite der Zone der jeweiligen Komponente, während die Höhe des Peaks von der Konzentration der Komponente in dem Trägergas abhängig ist. Das Zeitintegral über jeden Peak, also die Peakfläche, ist zu der Menge der betreffenden Probenkomponente und damit zu der Dosiermenge der Probe und der Konzentration der jeweiligen Komponente in dem zu analysierenden Stoffgemisch proportional. Um daher aus den Peakflächen die Mengen der einzelnen Probenkomponenten bzw. deren Konzentrationen bestimmen zu können, sind die Peakflächen mit Kalibrierfaktoren (Responsefaktoren) zu multiplizieren, welche zuvor im Rahmen von Kalibriermessungen für jede Komponente anhand von Kalibrierproben mit vorgegebener Menge und Zusammensetzung ermittelt werden müssen.

Für eine genaue und zuverlässige gaschromatographische Analyse einer Probe, muss daher deren Dosierung entsprechend genau und zuverlässig erfolgen. Durch Kalibrierung des Chromatographen in bestimmten Zeitabständen kann festgestellt werden, ob seit der letzten Kalibrierung Veränderungen an dem Chromatographen aufgetreten sind oder nicht. Bei erheblichen Veränderungen muss befürchtet werden, dass die seit der letzten Kalibrierung erhaltenen Analysenergebnisse fehlerhaft waren und beispielsweise zu einer fehlerhaften Prozesssteuerung geführt haben. In solchen Fällen werden die Kalibrierzyklen verkürzt. Vom Zeitpunkt jeder neuen Kalibrierung an werden die von dem Chromatographen bis zum nächsten Kalibrierungszeitpunkt gelieferten Analysenergebnisse als korrekt angenommen.

In zunehmendem Maße wird jedoch eine Validierung der Analysenergebnisse, d.h. eine gesicherte Aussage über die Richtigkeit jeder einzelnen Analyse gefordert. Dies kann, wie oben gezeigt, durch die Kalibrierung nicht geleistet werden.

Eine Möglichkeit der Validierung ist durch das sogenannte Verfahren der inneren Normierung (100%-Methode) gegeben, wobei eine Probe vollständig quantitativ analysiert wird, um anschließend die Gesamtmenge der Probe aus der Summe aller aus den Peakflächen ermittelten Komponentenmengen zu berechnen. Wenn die berechnete Gesamtmenge der Probe bei aufeinanderfolgenden Analysen schwankt, werden die Flächen der zu bestimmenden Peaks entsprechend korrigiert. Voraussetzungen sind dabei jedoch die vollständige Analyse der Probe, die Verwendung nur eines einzigen Detektors, da sich zwei oder mehr Detektoren unterschiedlich verändern können, sowie die Konstanz der Responsefaktoren aller Probenkomponenten. Diese Voraussetzungen sind jedoch zumeist nicht gegeben. So werden insbesondere in der Prozess-Chromatographie üblicherweise an Schnittstellen innerhalb des Trennsystems nicht interessierende Komponenten herausgeschnitten oder rückgespült, wobei nicht an allen Ausgängen des Trennsystems Detektoren vorhanden sind.

Eine weitere Möglichkeit der Validierung der Analysenergebnisse bietet das Verfahren des inneren Standards, wobei der Probe eine Standardverbindung in bekannter Menge zugegeben wird. In dem Maße, wie die Peakfläche des Standardpeaks bei aufeinanderfolgenden Analysen schwankt, werden die Flächen der zu bestimmenden Peaks korrigiert. Dieses in der Labor-Chromatographie verwendete Verfahren ist jedoch in der Prozess-Chromatographie in der Regel nicht anwendbar, weil das genaue Zumischen des Standards zu einer on-line aus dem Prozess entnommenen Probe mehr Probleme schafft als beseitigt.

Aus der US 3 686 923 ist ein Chromatograph bekannt, bei dem nach der Dosierung der Probe der dabei erhaltene Probenpfropf in zwei definierte Teile aufgespalten wird, wobei der größere Teil durch die Trenneinrichtung zu einem Detektor und der kleinere Teil direkt zu dem Detektor geleitet werden. Der kleinere Teil des Probenpfropfs erreicht den Detektor vor den durch die Trenneinrichtung getrennten Probenkomponenten und wird als Indikator für die Menge und Gesamtzusammensetzung der Probenpfropfe detektiert. Die quantitative Bestimmung des Probenpfropfes ist von der Genauigkeit abhängig, mit der dieser aufgespalten wird. Außerdem wird der Probenpfropf durch die Aufspaltung gestört.

Aus der JP 61-212759 ist ein Verfahren zur chromatischen Analyse einer dosierten Probe bekannt, die zur Trennung von in der Probe enthaltenen Komponenten durch eine Trenneinrichtung geleitet wird, an deren Ende ausgewählte Komponenten mittels eines Detektors erfasst werden. Mittels eines weiteren Detektors vor der Trenneinrichtung wird die Probe zerstörungsfrei erfasst und ihre Konzentration bestimmt. Anhand dieser Konzentration und der Konzentrationen, die für die ausgewählten Komponenten bestimmt werden, wird die Verteilungsrate der ausgewählten Komponenten ermittelt.

Der Erfindung liegt die Aufgabe zugrunde, eine Validierung und im Weiteren eine Erhöhung der Genauigkeit der Analysenergebnisse bei der Gaschromatographie, insbesondere der Prozess-Gaschromatographie, zu ermöglichen.

Ausgehend von dem aus der US 3 686 923 bekannten Verfahren zur gaschromatographischen Analyse einer Probe, bei dem ein durch Dosieren der Probe erhaltener Probenpfropf zur Trennung von in ihm enthaltenen Komponenten der Probe durch eine Trenneinrichtung geleitet wird, an deren Ende ausgewählte Komponenten mittels eines Detektors erfasst und anhand des von dem Detektor gelieferten Detektorsignals quantitativ bestimmt werden, und wobei der Probenpfropf quantitativ bestimmt und dass das Ergebnis der quantitativen Bestimmung des Probenpfropfes zur Überprüfung der Analyse herangezogen wird, wird die Aufgabe dadurch gelöst, dass mittels eines weiteren Detektors vor der Trenneinrichtung der Probenpfropf zerstörungsfrei erfasst wird und dass anhand des von dem weiteren Detektor gelieferten weiteren Detektorsignals die quantitative Bestimmung des Probenpfropfes erfolgt.

Der weitere Detektor liefert dabei über sein Detektorsignal einen Ist-Wert der tatsächlich in die Trenneinrichtung eingeleiteten Probenmenge, so dass mit diesem Ist-Wert Validierungsaussagen möglich sind. Der eingeleitete Probenpfropf darf durch die weitere Detektion nicht zerstört werden, so dass als weiterer Detektor beispielsweise ein Wärmeleitfähigkeitsdetektor, ein geeigneter optischer Detektor, oder ein mit akustischen Oberflächenwellen arbeitender Detektor, nicht aber beispielsweise ein Flammenionisationsdetektor in Frage kommt. Unter Trenneinrichtung sind sowohl eine einzige Trennsäule als auch eine komplette Trennsäulenschaltung oder einzelne Trennsäulen als Bestandteil einer Trennsäulenschaltung zu verstehen, wobei die Trenneinrichtung dementsprechend auch über mehrere Ausgänge mit Detektoren verfügen kann. Die quantitative Erfassung des Probenpfropfes ist somit nicht nur auf die Stelle unmittelbar hinter der Dosierung der Probe beschränkt, sondern kann überall dort erfolgen, wo Trennsäulen über Umschalteinrichtungen zum Ausschneiden oder Verzweigen von Probenkomponenten zum oder zum Rückspülen einzelner Trennsäulen miteinander verbunden sind. Dosierfehler und Probenverluste beim Umschalten können somit erkannt und korrigiert werden.

So wird die Dosierung der Probe in vorteilhafter Weise dadurch validiert, dass der Probenpfropf mittels des weiteren Detektors unmittelbar nach der Dosierung der Probe quantitativ bestimmt wird und dass das Ergebnis der quantitativen Bestimmung des Probenpfropfes mit dem bekannten Wert einer Kalibrierprobenmenge verglichen wird. Dazu wird beispielsweise einmalig ein Kalibrierprobenpfropf mit dem weiteren Detektor detektiert und die Soll-Fläche des dabei erhaltenen weiteren Detektorsignals abgespeichert. Mit dieser Soll-Fläche wird dann jedes Mal die Ist-Fläche des bei der Detektion eines Probenpfropfes erzeugten weiteren Detektorsignal verglichen. Je nach der aktuellen Zusammensetzung einer zu analysierenden Probe wird diese und damit die erhaltene Ist-Fläche von der entsprechenden Kalibrierprobe abweichen; wenn jedoch diese Abweichungen z. B. gering sind und gleichzeitig durch den Detektor am Ende der Trenneinrichtung große Änderungen in der Probenzusammensetzung detektiert werden, so ist sicher, dass die am Ende der Trenneinrichtung detektierten großen Änderungen tatsächlich Änderungen der Probenzusammensetzung darstellen und nicht auf Dosierfehlern beruhen. Große bzw. plötzliche Veränderungen in einem Prozess, aus dem die zu analysierende Probe entnommen wird, können dann mit Sicherheit erkannt werden, um daraufhin gegensteuernd in den Prozess eingreifen zu können.

Wie bereits oben erwähnt, kann bei vollständiger Analyse einer Probe die Probenmenge auch anhand der 100%-Methode aus der Summe aller Peakflächen des Chromatogramms ermittelt werden. In diesem Fall bietet der weitere Detektor den Vorteil einer Überwachung der Funktionsfähigkeit des Detektors am Ausgang der Trenneinrichtung bzw. der Detektoren an mehreren Ausgängen. Wenn sich beispielsweise im Laufe der Zeit die Empfindlichkeit von Detektoren ändert, so führt dies zu unterschiedlichen Ergebnissen bei der Bestimmung der Probenmenge über die 100%-Methode und das weitere Detektorsignal der weiteren Detektors.

Auf gleiche Weise, wie für die Dosierung der Probe am Eingang der Trenneinrichtung beschrieben, können auch Fehlfunktionen bei Umschalteinrichtungen zwischen einzelnen Trennsäulen erkannt werden.

Im Weiteren lässt sich die Genauigkeit der chromatographischen Analyse dadurch erhöhen, dass die Ergebnisse der quantitativen Bestimmung ausgewählter Komponenten der Probe mittels des Ergebnisses der quantitativen Bestimmung des Probenpfropfes korrigiert werden. Wie nämlich eingangs erläutert, werden zur quantitativen Bestimmung von Probenkomponenten die zugehörigen Peakflächen in dem Detektorsignal mit Kalibrierfaktoren (Responsefaktoren) multipliziert, welche zuvor für die Komponenten anhand von Kalibrierproben mit vorgegebener Menge und Zusammensetzung ermittelt wurden. Eine gegenüber der Soll-Dosiermenge abweichende Ist-Dosierung der Probe kann daher unter Verwendung der stoffspezifischen Bestandteile der Kalibrierfaktoren, z. B. der Wärmeleitfähigkeit der Probekomponenten, aus dem Ergebnis der quantitativen Bestimmung der Komponenten herausgerechnet werden.

Wie bereits erwähnt, darf der Probenpfropf durch die weitere Detektion vor dem Eintritt in die Trenneinrichtung nicht zerstört werden. Um darüber hinaus auch die Trennleistung insgesamt nicht zu beeinträchtigen, weist der verwendete weitere Detektor vorzugsweise einen von dem Probenpfropf durchströmten Messpfad auf, dessen Querschnittsabmessungen zumindest annähernd den inneren Querschnittsabmessungen der Trenneinrichtung entsprechen. Dadurch wird verhindert, dass der möglichst kurze und scharf begrenzte Probenpfropf durch den weiteren Detektor gestört wird. Dasselbe gilt auch für die mehr oder weniger getrennten Zonen der Probenkomponenten, wenn der weitere Detektor zwischen zwei Trennsäulen einer Trennsäulenschaltung liegt.

Zur weiteren Erläuterung der Erfindung wird im Folgenden auf die Figuren der Zeichnung Bezug genommen. Im Einzelnen zeigen
- Figur 1: ein Ausführungsbeispiel eines nach dem erfindungsgemäßen Verfahren arbeitenden Gaschromatographen mit einem Detektor am Ende der Trennsäule und einem weiteren Detektor am Anfang der Trennsäule,
- Figur 2: ein Beispiel für die von dem Detektor und dem weiteren Detektor gelieferten Detektorsignale,
- Figur 3: ein Ausführungsbeispiel für den Detektor und weiteren Detektor,
- Figur 4: ein Ausführungsbeispiel eines Gaschromatographen mit zwei hintereinander geschalteten Trennsäulen und einer dazwischen liegenden Umschalteinrichtung zum Rückspülen der ersten Trennsäule,
- Figur 5: ein Ausführungsbeispiel eines Gaschromatographen mit zwei hintereinandergeschalteten Trennsäulen und einer dazwischenliegenden Umschalteinrichtung zum Ausschneiden von Probenkomponenten und zum Rückspülen der erste Trennsäule und
- Figur 6: ein Ausführungsbeispiel eines Gaschromatographen mit einer hinter einer ersten Trennsäule liegenden Umschalteinrichtung zum Verteilen von Probenkomponenten auf zwei weitere Trennsäulen und zum Rückspülen der erste Trennsäule.

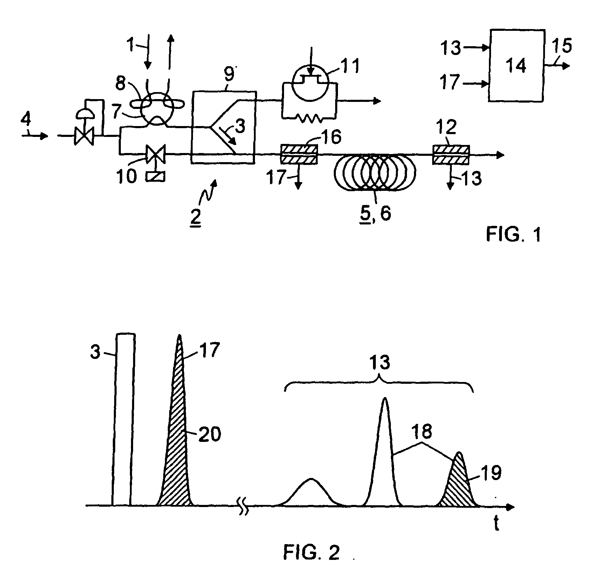

Figur 1 zeigt einen Gaschromatographen zur Analyse einer Probe (Stoffgemisch) 1, die nach Entnahme aus einem technischen Prozess und Aufbereitung, wie z. B. Verdampfung, einer Dosiereinrichtung 2 zugeführt wird, wie sie beispielsweise aus der WO 00/17634 bekannt ist. Die Dosiereinrichtung 2 dient dazu, zu einem vorgegebenen Zeitpunkt eine vorgegebene Dosiermenge der Probe 1 in Form eines kurzen und scharf begrenzten Probenpfropfes 3 in einen Trägergasstrom 4 einzuschleusen und einer Trenneinrichtung 5, hier in Form einer einzigen Trennsäule 6, zuzuführen. Dazu weist die Dosiereinrichtung 2 ein Dosierventil 7 auf, welches in einer hier gezeigten ersten Schaltstellung die Probe 1 in ein Dosiervolumen 8 leitet. In einer zweiten, um 60° gedrehten Schaltstellung wird das Dosiervolumen 8 in den Weg für das Trägergas 4 geschaltet und von dem Trägergas 4 einem Injektor 9 zugeführt. Solange ein Magnetventil 10 geöffnet ist, fließt das Trägergas 4 durch das Magnetventil 10 und den Injektor 9 in die Trennsäule 6, während die Probe 1 aus dem Dosiervolumen 8 über ein zur Justierung des Injektors 9 dienendes Membranventil 11 nach außen abgeleitet wird. Wird das Magnetventil 10 für eine vorgegebene Dauer geschlossen, so wird in dem Injektor 9 aus der Probe 1 ein Teil abgezweigt und als scharf begrenzter Probenpfropf 3 in die Trennsäule 6 eingeschleust. Diese ist dazu ausgebildet, die in dem Probenpfropf 3 enthaltenen Probenkomponenten beim Durchströmen der Trennsäule 6 zu trennen, so dass die einzelnen Probenkomponenten am Ende der Trennsäule 6 nacheinander an einen Detektor 12 gelangen und dort detektiert werden. Der Detektor 12 liefert ein Detektorsignal 13, das in einer Auswerteeinrichtung 14 zur quantitativen Bestimmung ausgewählter Probenkomponenten ausgewertet wird. Das dabei erhaltene Analysenergebnis 15 kann einer Prozesssteuer- und/oder -regeleinrichtung zugeführt werden, die in Abhängigkeit von dem Ergebnis 15 steuernd oder regelnd in den Prozess, aus dem die Probe 1 entnommen wurde, eingreifen kann. Zur Validierung des Analysenergebnisses 15 ist zwischen der Dosiereinrichtung 2 und der Trenneinrichtung 5 ein weiterer Detektor 16 angeordnet, der den Probenpfropf 3 zerstörungsfrei detektiert. Der weitere Detektor 16 liefert dabei ein weiteres Detektorsignal 17, aus dem in der Auswerteeinrichtung 14 die tatsächlich in die Trenneinrichtung 5 eingeleiteten Probenmenge bestimmt wird.

Figur 2 zeigt entsprechend ihrem zeitlichen Auftreten den von dem Injektor 9 abgegebenen Probenpfropf 3, das von dem weiteren Detektor 16 gelieferte weitere Detektorsignal 17 und das von dem Detektor 12 gelieferte Detektorsignal 13. Das Detektorsignal 13 weist für jede detektierte Probenkomponente einen Peak, z. B. 18, auf, dessen Peakfläche 19 zu der Menge der betreffenden Probenkomponente proportional ist. Durch Multiplikation der Peakfläche 19 mit einem vorab anhand einer Kalibrierprobe bekannter Zusammensetzung und Menge ermittelten Kalibrierfaktor wird die Menge der betreffenden Probenkomponente berechnet, wobei vorausgesetzt ist, dass die der Trenneinrichtung 5 aufgegebene Probenmenge genau der Kalibrierprobenmenge entspricht bzw. genau bekannt ist. Aufgrund von Dosierfehlern, beispielsweise als Folge langsamer Veränderungen der Dosiereinrichtung 2, können jedoch Abweichungen zwischen der Soll-Dosiermenge und der Ist-Dosiermenge des Probenpfropfes 3 auftreten. Das von dem weiteren Detektor 16 gelieferte weitere Detektorsignal 17 ist mit seiner Fläche 20 zu der Ist-Dosiermenge proportional und ermöglicht daher bei jedem Analysevorgang eine Überprüfung der Dosierung bis hin zu einer Ermittlung der tatsächlichen Ist-Dosiermenge. Dazu wird beispielsweise einmalig ein Kalibrierprobenpfropf mit dem weiteren Detektor 16 detektiert und die Soll-Fläche des dabei erhaltenen weiteren Detektorsignals 17 abgespeichert. Mit dieser Soll-Fläche wird dann jedes Mal die Ist-Fläche 20 des bei der Detektion eines Probenpfropfes 3 erzeugten weiteren Detektorsignals 17 verglichen. Mit der dabei erhaltenen Abweichung zwischen Soll-Fläche und Ist-Fläche 20 kann dann unter weiterer Berücksichtigung der Kalibrierfaktoren das Analysenergebnis 15 für jede Probenkomponente korrigiert werden.

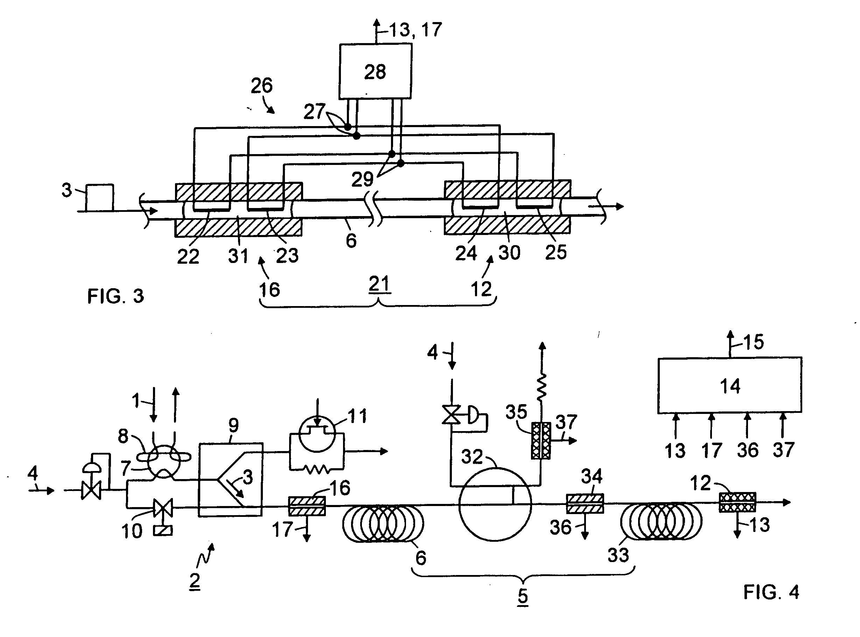

Figur 3 zeigt einen abwechselnd als Detektor 12 und als der weitere Detektor 16 arbeitenden Wärmeleitfähigkeitsdetektor 21. Der Wärmeleitfähigkeitsdetektor 21 weist vier drahtförmige Heizwiderstände 22, 23, 24 und 25 auf, die in einer Brückenschaltung 26 angeordnet sind, wobei die Brückenschaltung 26 an zwei einander gegenüberliegenden Schaltungspunkten 27 aus einer Detektorschaltung 28 mit einem Strom gespeist wird und die zwischen den beiden anderen gegenüberliegenden Schaltungspunkten 29 auftretende Spannung von der Detektorschaltung 28 zur Erzeugung des Detektorsignals 13 bzw. des weiteren Detektorsignals 17 erfasst wird. Die in der Brückenschaltung 26 einander diagonal gegenüberliegenden Heizwiderstände 24 und 25 sind am Ende der Trennsäule 6 in einem Messpfad 30 des Detektors 12 angeordnet, während die beiden übrigen Heizwiderstände 22 und 23 in einem zwischen die Dosiereinrichtung 2 (Figur 1) und die Trennsäule 6 geschalteten weiteren Messpfad 31 des weiteren Detektors 16 angeordnet sind. Die Messpfade 30 und 31, insbesondere aber der weitere Messpfad 31, sind derart ausgebildet, dass ihre inneren Querschnittsabmessungen denen der Trennsäule 6 entsprechen, so dass der möglichst kurze und scharf begrenzte Probenpfropf 3 durch den weiteren Detektor 16 und die am Ende der Trennsäule erscheinenden Zonen mit den getrennten Probenkomponenten durch den Detektor 12 nicht gestört werden. Der mittels des Trägergases 4 in die Trennsäule 6 eingeleitete Probenpfropf 3 gelangt zunächst in den Messpfad 31 des weiteren Detektors 16, während der Messpfad 30 des Detektors 12 von dem Trägergas 4 durchströmt wird. Der Wärmeleitfähigkeitsdetektor 21 arbeitet dann als der weitere Detektor 16, wobei der Messpfad 30 des Detektors 12 als Referenzpfad dient. Wenn die getrennten Probenkomponenten schließlich in den Messpfad 30 des Detektors 12 gelangen, arbeitet der Wärmeleitfähigkeitsdetektor 21 als der Detektor 12, wobei der von dem Trägergas 4 durchströmte Messpfad 31 des weiteren Detektors 16 als Referenzpfad für den Detektor 12 dient. Die Heizwiderstände 22, 23, 24 und 25 und die Innenwände der Messpfade 30 und 31 bestehen aus Materialien, die sich gegenüber dem zu analysierenden Stoffgemisch bzw. dem Trägergas 4 inert verhalten, also beispielsweise aus Gold bzw. Siliziumdioxid (Quarz), so dass eine Veränderung des Stoffgemischs aufgrund chemischer Reaktionen ausgeschlossen ist.

Der in Figur 4 gezeigte Gaschromatograph unterscheidet sich von dem nach Figur 1 dadurch, dass die Trennsäule 6 der Trenneinrichtung 5 als Vorsäule dient, der über eine Umschalteinrichtung 32 eine Hauptsäule 33 nachgeschaltet ist. Die Umschalteinrichtung 32 dient dazu, die Vorsäule 6 mit Trägergas 4 rückzuspülen, wenn der Probenpfropf 3 diese verlassen hat und mit den teilweise getrennten Probenkomponenten in die Hauptsäule 33 eingetreten ist. Der Detektor 12 ist am Ende der Hauptsäule 33 angeordnet und detektiert dort die vollständig getrennten Probenkomponenten. Neben dem weiteren Detektor 16 am Eingang der Vorsäule 6 sind weitere Detektoren 34 und 35 an den Ausgängen der Umschalteinrichtung 32 angeordnet, wobei der weitere Detektor 34 zwischen der Umschalteinrichtung 32 und dem Eingang der Hauptsäule 33 liegt. Die Fläche des von dem weiteren Detektor 34 gelieferten Detektorsignals 36 ist somit proportional zu der tatsächlich in die Hauptsäule 33 gelangenden Probenmenge, während die Fläche des von dem weiteren Detektor 35 gelieferten Detektorsignals 37 proportional zu den dort den Chromatographen verlassenden Probenmengen ist. Durch Auswertung der Detektorsignale 13, 17, 36 und 37 in der Auswerteeinrichtung 14 kann also genau bestimmt werden, welche Probenmengen tatsächlich in die Trennsäulen 6 und 33 gelangen, so dass Fehlfunktionen der Dosiereinrichtung 2 und der Umschalteinrichtung 32 erkannt und ihre Auswirkungen auf die Analysenergebnisse 15 berücksichtigt bzw. korrigiert werden können, so wie dies vorstehend anhand der Figuren 1 bis 3 erläutert wurde. Wie durch unterschiedliche Schraffierung hervorgehoben ist, werden auch hier die Funktionen von jeweils zwei Detektoren 16 und 34 bzw. 12 und 37 von jeweils einem einzigen Wärmeleitfähigkeitsdetektor wahrgenommen. Die durch einen Wärmeleitfähigkeitsdetektor realisierten Detektoren, z. B. 16 und 34, sind dabei im Hinblick auf die Funktionsweise des Chromatographen so ausgewählt, dass immer nur einer der beiden Detektoren von der Probe durchströmt wird, während gleichzeitig durch den jeweils anderen Detektor das Trägergas 4 strömt.

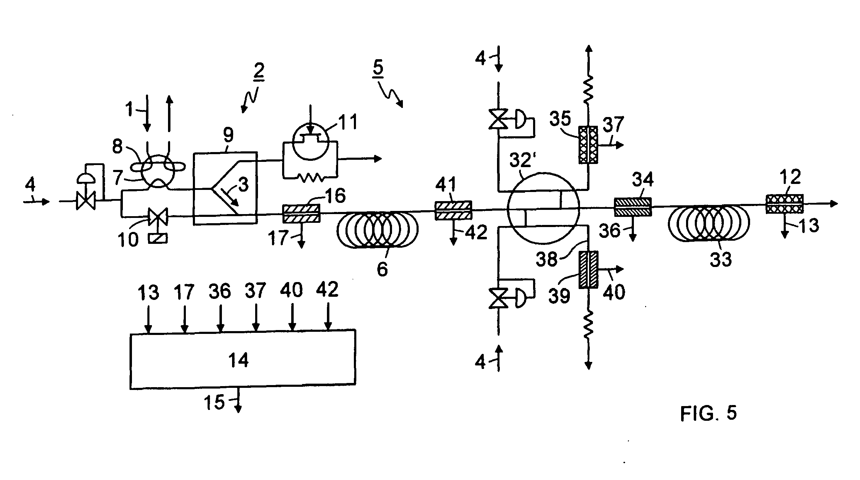

Bei dem in Figur 5 gezeigten Gaschromatographen ist im Unterschied zu Figur 4 die Umschalteinrichtung 32' dazu ausgebildet, wahlweise die vorgetrennten Probenkomponenten nach ihrem Austritt aus der Vorsäule 6 ganz oder teilweise über einen Gaspfad aus der Trenneinrichtung 5 auszuschleusen (auszuschneiden) und gleichzeitig die Hauptsäule 33 mit dem Trägergas 4 zu spülen oder die vorgetrennten Probenkomponenten in die Hauptsäule 33 weiterzuleiten und ggf. gleichzeitig die Vorsäule 6 mit dem Trägergas rückzuspülen. Eine solche Umschalteinrichtung 32' ist beispielsweise aus der bereits erwähnten WO 00/17634 bekannt. Wie bei dem Beispiel nach Figur 4 sind an allen Ausgängen der Umschalteinrichtung 32' Detektoren 34, 35 und 39 angeordnet, um durch Auswertung ihrer Detektorsignale 36, 37 und 40 zusammen mit den Detektorsignalen 13 und 17 der Detektoren 12 und 13 am Anfang und Ende der Trenneinrichtung 5 zu bestimmen, welche Probenmengen tatsächlich in die Trennsäulen 6 und 33 gelangen bzw. die Umschalteinrichtung 32' verlassen. Die quantitative Analyse der mittels der Umschalteinrichtung 32' ausgeschnittenen Probenkomponenten erfolgt in vorteilhafter Weise durch einen Detektor 41 unmittelbar am Ende der Vorsäule 6 und nicht z. B. durch den Detektor 39, so dass das Detektorsignal 42 nicht durch die Umschalteinrichtung 32' beeinflusst ist. Auch hier werden die Funktionen von jeweils zwei Detektoren, z. B. 12 und 35, von jeweils einem einzigen Wärmeleitfähigkeitsdetektor wahrgenommen.

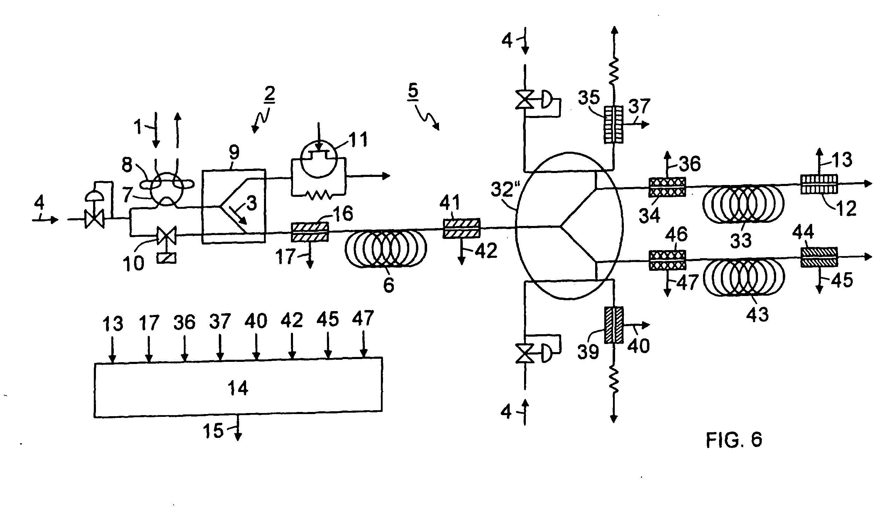

Bei dem in Figur 6 gezeigten Gaschromatographen ist im Unterschied zu Figur 5 die Umschalteinrichtung 32" zusätzlich dazu ausgebildet, die Weiterleitung der Probe zwischen der Hauptsäule 33 und einer weiteren Hauptsäule 43 umzuschalten. Am Ausgang der weiteren Hauptsäule 43 ist ein Detektor 44 angeordnet, der ein Detektorsignal 45 erzeugt, und am Eingang der weiteren Hauptsäule 43 ein weiterer Detektor 46, der ein Detektorsignal 47 erzeugt. Auch hier wird durch Auswertung der Detektorsignale 13, 17, 36, 37, 40, 42, 45 und 47 festgestellt, welche Probenmengen tatsächlich in die Trennsäulen 6, 33 und 43 gelangen bzw. die Umschalteinrichtung 32" verlassen.

## Patentansprüche

1. Verfahren zur gaschromatographischen Analyse einer Probe (1), wobei ein durch Dosieren der Probe (1) erhaltener Probenpfropf (3) zur Trennung von in ihm enthaltenen Komponenten der Probe (1) durch eine Trenneinrichtung (5) geleitet wird, an deren Ende ausgewählte Komponenten mittels eines Detektors (12) erfasst und anhand des von dem Detektor (12) gelieferten Detektorsignals (13) quantitativ bestimmt werden, wobei mittels eines weiteren Detektors (16) vor der Trenneinrichtung (5) der Probenpfropf (3) zerstörungsfrei erfasst wird, und wobei anhand des von dem weiteren Detektor (16) gelieferten weiteren Detektorsignals (17) die quantitative Bestimmung des Probenpfropfes (3) erfolgt, und das Ergebnis der quantitativen Bestimmung des Probenpfropfes (3) zur Überprüfung der Analyse herangezogen wird.

2. Verfahren nach Anspruch 1, **dadurch gekennzeichnet, dass** der Probenpfropf (3) mittels des weiteren Detektors (16) unmittelbar nach der Dosierung quantitativ bestimmt wird und dass das Ergebnis der quantitativen Bestimmung des Probenpfropfes (3) mit dem bekannten Wert einer Kalibrierprobenmenge verglichen wird.

3. Verfahren nach Anspruch 1 oder 2, **dadurch gekennzeichnet, dass** die Ergebnisse der quantitativen Bestimmung ausgewählter Komponenten der Probe (1) mittels des Ergebnisses der quantitativen Bestimmung des Probenpfropfes (3) korrigiert werden.

4. Verfahren nach einem der vorangehenden Ansprüche, **dadurch gekennzeichnet, dass** der weitere Detektor (16) einen von dem Probenpfropf (3) durchströmten Messpfad (31) aufweist, dessen Querschnittsabmessungen zumindest annähernd den inneren Querschnittsabmessungen der Trenneinrichtung (5) entsprechen.

5. Verfahren nach einem der vorangehenden Ansprüche, **dadurch gekennzeichnet, dass** als weiterer Detektor (16) ein Wärmeleitfähigkeitsdetektor (21) verwendet wird.

6. Verfahren nach Anspruch 5, **dadurch gekennzeichnet, dass** der Wärmeleitfähigkeitsdetektor (21) alternierend als Detektor (12) und als der weiterer Detektor (16) arbeitet, indem von in einer Brückenschaltung angeordneten Heizwiderständen (22, 23, 24, 25) zwei in den beiden unterschiedlichen Brückenhälften einander diagonal gegenüberliegende Heizwiderstände (24, 25) in einem Messpfad (30) des Detektors (12) und die beiden anderen Heizwiderstände (22, 23) in einem Messpfad (31) des weiteren Detektors (16) angeordnet sind und immer nur jeweils einer der beiden Messpfade (30, 31) von dem Probenpfropf (3) bzw. den ausgewählten Komponenten der Probe (1) durchströmt wird.

## Claims

1. Method for the gas chromatographic analysis of a sample (1), wherein a sample slug (3), which is obtained by way of metering the sample (1), is passed through a separation device (5) for separating the components of the sample (1), which are contained in said sample slug, with selected components being detected at the end of said separation device (5) by means of a detector (12) and being quantitatively determined on the basis of the detector signal (13) supplied by the detector (12), wherein a further detector (16) upstream of the separation device (5) is used to detect the sample slug (3) in a destruction-free manner, and wherein the sample slug (3) is quantitatively determined on the basis of the further detector signal (17) supplied by the further detector (16) and the result of the quantitative determination of the sample slug (3) is used to check the analysis.

2. Method according to Claim 1, **characterized in that** the sample slug (3) is quantitatively determined using the further detector (16) directly after metering and **in that** the result of the quantitative determination of the sample slug (3) is compared to the known value of a calibration sample amount.

3. Method according to Claim 1 or 2, **characterized in that** the results of the quantitative determination of selected components of the sample (1) are corrected using the result of the quantitative determination of the sample slug (3).

4. Method according to one of the preceding claims,
**characterized in that** the further detector (16) has a measurement path (31) through which the sample slug (3) flows and whose cross-sectional dimensions at least approximately correspond to the inner cross-sectional dimensions of the separation device (5).

5. Method according to one of the preceding claims, **characterized in that** a heat conductivity detector (21) is used as the further detector (16).

6. Method according to Claim 5, **characterized in that** the heat conductivity detector (21) operates in an alternating fashion as detector (12) and as the further detector (16), **in that**, from heating resistors (22, 23, 24, 25) which are arranged in a bridge circuit, two heating resistors (24, 25), which are diagonally opposite one another in the two different bridge halves, are arranged in a measurement path (30) of the detector (12) and the other two heating resistors (22, 23) are arranged in a measurement path (31) of the further detector (16) and the sample slug (3), or the selected components of the sample (1), flows or flow through in each case only one of the two measurement paths (30, 31).

## Revendications

1. Procédé d'analyse par chromatographie en phase gazeuse d'un échantillon ( 1 ), dans lequel on envoie un tampon ( 3 ) d'échantillon, obtenu par dosage de l'échantillon ( 1 ) pour la séparation des constituants de l'échantillon ( 1 ) qui y sont contenus, dans un dispositif ( 5 ) de séparation, à l'extrémité duquel des composants sélectionnés sont détectés au moyen d'un détecteur ( 12 ) et au moyen duquel des signaux ( 13 ) du détecteur fournis par le détecteur ( 12 ) sont déterminés quantitativement, dans lequel, au moyen d'un autre détecteur ( 16 ), on détecte sans destruction le bouchon ( 3 ) d'échantillon en amont du dispositif ( 5 ) de séparation en effectuant, au moyen du signal ( 17 ) supplémentaire de détection fourni par l'autre détecteur ( 16 ), la détermination quantitative du tampon ( 3 ) d'échantillon et en tirant profit du résultat de la détermination quantitative du tampon ( 3 ) de l'échantillon pour contrôler l'analyse.

2. Procédé suivant la revendication 1, **caractérisé en ce qu'**on détermine quantitativement, immédiatement après le dosage, le tampon ( 3 ) de l'échantillon au moyen de l'autre détecteur ( 16 ) et **en ce que** l'on compare le résultat de la détermination quantitative du tampon ( 3 ) de l'échantillon à la valeur connue d'une quantité d'échantillon étalonnée.

3. Procédé suivant la revendication 1 ou 2, **caractérisé en ce que** l'on corrige le résultat de la détermination quantitative de constituants sélectionnés de l'échantillon ( 1 ) au moyen du résultat de la détermination quantitative du tampon ( 3 ) de l'échantillon.

4. Procédé suivant l'une des revendications précédentes, **caractérisé en ce que** l'autre détecteur ( 16 ) a un trajet ( 31 ) de mesure, qui traverse le tampon ( 3 ) de l'échantillon et dont les dimensions de la section transversale correspondent au moins à peu près aux dimensions intérieures de la section transversale du dispositif ( 5 ) de séparation.

5. Procédé suivant l'une des revendications précédentes, **caractérisé en ce que** l'on utilise comme autre détecteur ( 16 ) un détecteur ( 21 ) de conduction de la chaleur.

6. Procédé suivant la revendication 5, **caractérisé en ce que** le détecteur ( 21 ) de la chaleur opère en alternance, comme détecteur ( 12 ) et comme autre détecteur ( 16 ), par le fait que, de deux résistances ( 22, 23, 24, 25 ) de chauffage montées suivant un circuit en pont, deux résistances ( 24, 25 ) de mesure, opposées en diagonale dans les deux moitiés différentes de pont, sont disposées dans un trajet ( 30 ) de mesure du détecteur ( 12 ) et les deux autres résistances ( 22, 23 ) de chauffage dans un trajet ( 31 ) de mesure de l'autre détecteur ( 16 ) et, toujours seulement respectivement, l'un des deux trajets ( 30, 31 ) de mesure passe dans le tampon ( 3 ) de l'échantillon ou dans les constituants sélectionnés de l'échantillon ( 1 ).
